# EUROPEAN PATENT APPLICATION

(11) **EP 4 517 742 A1**
(43) Date of publication of application: **05.03.2025**
(21) Application number: 23795071.2
(22) Date of filing: 14.04.2023
(51) Int. Cl.: G10L 15/06, G10L 13/02

(54) **MODEL TRAINING METHOD AND APPARATUS, SPEECH-TO-SPEECH TRANSLATION METHOD AND APPARATUS, AND MEDIUM**

(30) Priority: 26.04.2022 CN 202210448585
(71) Applicant: Beijing Youzhuju Network Technology Co., Ltd., Beijing 101299 (CN)
(72) Inventor: DONG, Qianqian, Beijing 100028 (CN); YUE, Fengpeng, Beijing 100028 (CN); KO, Yu Ting, Beijing 100028 (CN); WANG, Mingxuan, Beijing 100028 (CN); BAI, Qibing, Beijing 100028 (CN)
(74) Representative: Dentons UK and Middle East LLP
(86) International application number: PCT/CN2023/088492
(87) International publication number: WO 2023/207638

(57) **Abstract**

The present application provides a model training method and apparatus, a speech-to-speech translation method and apparatus, and a medium. The method includes: obtaining a speech recognition sample and a real speech-to-speech translation sample; generating a pseudo-labeled speech-to-speech translation sample based on the speech recognition sample; and training a speech-to-speech translation model based on the pseudo-labeled speech-to-speech translation sample and the real speech-to-speech translation sample. Therefore, the model training precision can be improved.

## Description

### CROSS-REFERENCE TO RELATED APPLICATIONS

The present application claims priority to Chinese Patent Application No. 2022104485858, filed on April 26, 2022 and entitled "MODEL TRAINING METHOD AND APPARATUS, SPEECH-TO-SPEECH TRANSLATION METHOD AND APPARATUS, AND MEDIUM", which is incorporated herein by reference in its entirety.

### TECHNICAL FIELD

Embodiments of the present application relate to the field of machine learning technologies, and in particular, to a model training method and apparatus, a speech-to-speech translation method and apparatus, and a medium.

### BACKGROUND ART

A speech-to-speech translation (S2ST) model aims at translating a source-language speech into a target-language speech, and is widely used in various scenarios, such as video translation, transnational conference presentations, and translation walkie-talkies. The speech-to-speech translation model is generally obtained through training by using a large amount of data. However, currently, it is difficult to acquire paired speech-to-speech translation samples in actual scenarios. The scarcity of data causes low model training precision.

### SUMMARY OF THE INVENTION

The present application provides a model training method and apparatus, a speech-to-speech translation method and apparatus, and a medium, so that the model training precision can be improved.

According to a first aspect, there is provided a model training method. The method includes: obtaining a speech recognition sample and a real speech-to-speech translation sample; generating a pseudo-labeled speech-to-speech translation sample based on the speech recognition sample; and training a speech-to-speech translation model based on the pseudo-labeled speech-to-speech translation sample and the real speech-to-speech translation sample.

According to a second aspect, there is provided a speech-to-speech translation method. The method includes: obtaining a source-language speech feature; and inputting the source-language speech feature into a speech-to-speech translation model that is obtained through training according to the first aspect or the optional manner of the first aspect, to obtain a target-language speech feature corresponding to the source-language speech feature.

According to a third aspect, there is provided a model training apparatus. The apparatus includes: an obtaining module, a generation module, and a training module, where the obtaining module is configured to obtain a speech recognition sample and a real speech-to-speech translation sample; the generation module is configured to generate a pseudo-labeled speech-to-speech translation sample based on the speech recognition sample; and the training module is configured to train a speech-to-speech translation model based on the pseudo-labeled speech-to-speech translation sample and the real speech-to-speech translation sample.

According to a fourth aspect, there is provided a speech-to-speech translation apparatus. The apparatus includes: an obtaining module and a processing module, where the obtaining module is configured to obtain a source-language speech feature; and the processing module is configured to input the source-language speech feature into a speech-to-speech translation model that is obtained through training according to the first aspect or the optional manner of the first aspect, to obtain a target-language speech feature corresponding to the source-language speech feature.

According to a fifth aspect, there is provided an electronic device. The electronic device includes: a processor and a memory. The memory is configured to store a computer program. The processor is configured to invoke and run the computer program stored in the memory, to perform the method described in the first aspect or the second aspect.

According to a sixth aspect, there is provided a computer-readable storage medium configured to store a computer program. The computer program causes a computer to perform the method described in the first aspect or the second aspect.

In conclusion, it is difficult to acquire paired speech-to-speech translation samples in actual scenarios, but it is relatively easy to acquire a speech recognition sample. A pseudo-labeled speech-to-speech translation sample can be generated based on the speech recognition sample, such that speech-to-speech translation samples are expanded, and thus the model training precision can be improved.

### BRIEF DESCRIPTION OF DRAWINGS

To illustrate the technical solutions of the embodiments of the present invention more clearly, the accompanying drawings for describing the embodiments are briefly described below. Apparently, the accompanying drawings in the following description illustrate merely some embodiments of the present invention, and a person of ordinary skill in the art may derive other drawings from these accompanying drawings without creative efforts.
FIG. 1 is a block diagram of a transformer;
FIG. 2 is a schematic diagram of a system architecture according to an embodiment of the present application;
FIG. 3 is a flowchart of a model training method according to an embodiment of the present application;
FIG. 4 is a flowchart of another model training method according to an embodiment of the present application;
FIG. 5 is a schematic diagram of a speech-to-speech translation model according to an embodiment of the present application;
FIG. 6 is a schematic diagram of another speech-to-speech translation model according to an embodiment of the present application;
FIG. 7 is a flowchart of a speech-to-speech translation method according to an embodiment of the present application;
FIG. 8 is a schematic diagram of a model training apparatus 800 according to an embodiment of the present application;
FIG. 9 is a schematic diagram of a speech-to-speech translation apparatus 900 according to an embodiment of the present application; and
FIG. 10 is a schematic block diagram of an electronic device 1000 according to an embodiment of the present application.

### DETAILED DESCRIPTION OF THE INVENTION

The technical solutions in the embodiments of the present invention are clearly and completely described below with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the scope of protection of the present invention.

It should be noted that the terms "first", "second", and the like in the description, claims, and drawings of the present invention are intended to distinguish between similar objects but do not necessarily describe a specific order or sequence. It should be understood that the data termed in such a way is interchangeable in proper circumstances, so that the embodiments of the present invention described herein can be implemented in other orders than those illustrated or described herein. In addition, the terms "include" and "have" and any variants thereof are intended to cover a non-exclusive inclusion. For example, a process, method, system, product, or server that includes a list of steps or units is not necessarily limited to those expressly listed steps or units, but may include other steps or units not expressly listed or inherent to such a process, method, product, or device.

Before the technical solutions of the present application are described, knowledge related to the technical solutions of the present application is first described below.

### I. Encoder and decoder

An encoder is configured to process a source-language speech feature, and compress the source-language speech feature into a hidden representation of a fixed length. The hidden representation is also referred to as a context vector, a semantic code, a semantic vector, etc., and the hidden representation is expected to better represent information of the language speech feature.

A decoder is initialized by using the hidden representation, to obtain a target-language speech feature.

### II. Transformer

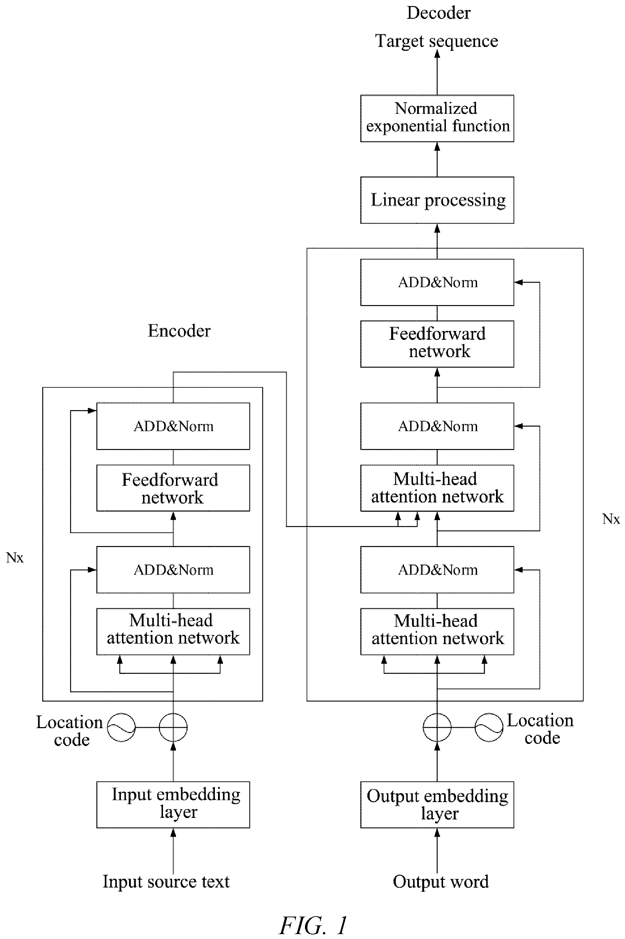

FIG. 1 is a block diagram of a transformer. As shown in FIG. 1, an encoder may be composed of N identical units, where N = 6. Each unit includes two sub-units. The first one is a self-attention network using a multi-head self-attention mechanism, the second one is a fully connected feedforward network, and an activation function is an ReLU. The two sub-units both use residual connection (residual connection, ADD) and layer normalization (Norm). A decoder is almost the same as the encoder. The difference between the decoder and the encoder lies in that a multi-head attention mechanism (encoder-decoder attention) layer can be added to the decoder to process an output of the encoder. In addition, a first unit of the decoder, i.e. a first unit that uses the multi-head self-attention mechanism, performs a masking operation to ensure that the decoder does not read information that is located after the current location.

The technical problem to be solved by the present application and the inventive concept of the present application are described below.

As described above, a speech-to-speech translation model is generally obtained through training by using a large amount of data. However, currently, it is difficult to acquire paired speech-to-speech translation samples in actual scenarios. The scarcity of data causes low model training precision.

To solve the above technical problem, the present application proposes expanding of training data to improve the model training precision.

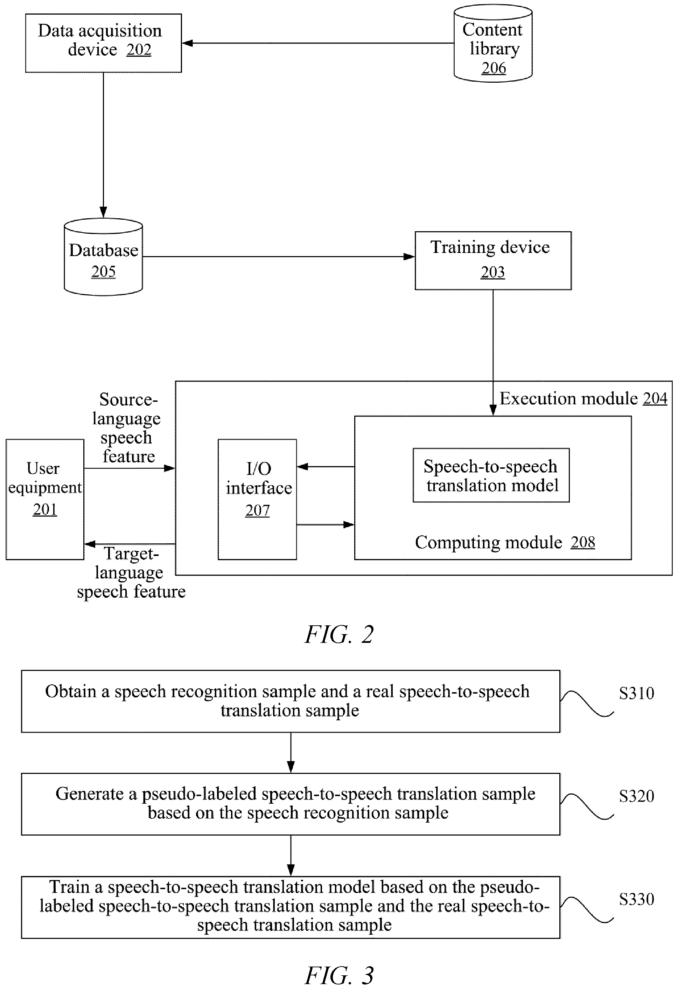

In some embodiments, a system architecture in an embodiment of the present application is as shown in FIG. 2.

FIG. 2 is a schematic diagram of a system architecture according to an embodiment of the present application. The system architecture includes user equipment 201, a data acquisition device 202, a training device 203, an execution device 204, a database 205, and a content library 206.

The data acquisition device 202 is configured to read training data from the content library 206, and store the read training data into the database 205. The training data involved in this embodiment of the present application includes a pseudo-labeled speech-to-speech translation sample and a real speech-to-speech translation sample.

The training device 203 trains a speech-to-speech translation model based on the training data maintained in the database 205, such that the trained speech-to-speech translation model can effectively translate a source-language speech into a target-language speech.

In addition, with reference to FIG. 2, the execution device 204 is configured with an I/O interface 207 for performing data interaction with an external device. For example, the execution device receives, through the I/O interface, a source-language speech feature sent by the user equipment 201. A computing module 208 in the execution device 204 processes the input source-language speech feature by using the trained speech-to-speech translation model, outputs a target-language speech feature, which may specifically be a target-language speech feature, and sends a corresponding result to the user equipment 201 through the I/O interface.

The user equipment 201 may be a mobile phone, a tablet computer, a notebook computer, a palmtop computer, a mobile Internet device (MID), a desktop computer, or another terminal device having a browser installation function.

The execution device 204 may be a server.

For example, the server may be a computing device, such as a rack server, a blade server, a tower server, or a cabinet server. The server may be an independent test server, or a test server cluster composed of a plurality of test servers.

In this embodiment, the execution device 204 is connected to the user equipment 201 via a network. The network may be a wireless or wired network, such as an intranet, the Internet, a global system for mobile communications (GSM), wideband code division multiple access (WCDMA), the 4th generation (4G) network, the 5th generation (5G) network, Bluetooth, wireless fidelity (Wi-Fi), and a voice network.

It should be noted that FIG. 2 is merely a schematic diagram of a system architecture according to an embodiment of the present application, and position relationships between the devices, components, modules, etc. shown in the figure do not constitute any limitation. In some embodiments, the data acquisition device 202, the user equipment 201, the training device 203, and the execution device 204 may be the same device. The database 205 may be distributed on one or more servers, and the content library 206 may be distributed on one or more servers.

The technical solutions in the embodiments of the present application are described below in detail by means of some embodiments. The following several embodiments may be combined with each other, and the same or similar concepts or processes may not be described again in some embodiments.

FIG. 3 is a flowchart of a model training method according to an embodiment of the present application. The method may be performed by any electronic device such as a mobile phone, a tablet computer, a notebook computer, a palmtop computer, an MID, or a desktop computer. For example, the method may be performed by the training device in FIG. 2. This is not limited in the present application. As shown in FIG. 3, the method includes the following steps:
S310: Obtain a speech recognition sample and a real speech-to-speech translation sample.
S320: Generate a pseudo-labeled speech-to-speech translation sample based on the speech recognition sample.
S330: Train a speech-to-speech translation model based on the pseudo-labeled speech-to-speech translation sample and the real speech-to-speech translation sample.

Optionally, the speech-to-speech translation model in the present application may be a speech-to-speech translation model based on multi-task learning (MTL), and certainly may also be a speech-to-speech translation model based on single-task learning. This is not limited in the present application. Multi-task learning is a promising field in machine learning, and the goal thereof is to obtain, by using useful information included in a plurality of learning tasks, a more accurate learner for each task through learning. In addition, in the multi-task learning, since different tasks share an inductive bias, the tasks can generally improve each other, thereby preventing a single task from easily falling into a local optimum.

For convenience, a real speech-to-speech translation sample and a pseudo-labeled speech-to-speech translation sample are collectively referred to as a speech-to-speech translation sample below. It should be understood that the number of data elements included in a speech-to-speech translation sample is related to whether a speech-to-speech translation model is based on multi-task learning or single-task learning. For example, if the speech-to-speech translation model is a speech-to-speech translation model based on single-task learning, the speech-to-speech translation sample may be a two-tuple, and includes: a source-language speech feature and a target-language speech feature. If the speech-to-speech translation model is a speech-to-speech translation model based on multi-task learning, and a plurality of tasks include: one primary task and two secondary tasks, where the primary task is a speech-to-speech translation task, and the two secondary tasks are respectively a speech recognition task and a speech-to-text translation task. The speech recognition task is used to transform a source-language speech feature into source-language text, and the speech-to-text translation task is used to transform a source-language speech feature into source-language text and transform the source-language text into target-language text. In this case, the speech-to-speech translation sample may be a quadruple, and includes: a source-language speech feature, source-language text, a target-language speech feature, and target-language text.

Optionally, the real speech-to-speech translation sample includes: a first source-language speech feature, first source-language text, a first target-language speech feature, and first target-language text.

It should be understood that the first source-language speech feature is a real source-language speech feature, the first source-language text is real source-language text, the first target-language text is also real target-language text, and the first target-language speech feature is a target-language speech feature that is obtained by an electronic device by performing synthesis on the first target-language text. For example, the electronic device may input the first target-language text into a text-to-speech model, to obtain a first target-language speech feature.

Optionally, the speech recognition sample includes: a second source-language speech feature and second source-language text. The second source-language speech feature is a real source-language speech feature, and the second source-language text is also real source-language text.

It should be understood that the so-called real source-language speech feature is a source-language speech feature that can be obtained in a real scenario. For example, the electronic device may acquire speech of a user by using a microphone, and extract a feature from the speech. The real source-language text may be language text that is obtained manually. For example, the user may record a piece of speech, to form language text corresponding to the speech. The real target-language text may also be language text that is obtained manually. For example, the user translates the content of the source-language text into target-language text.

Optionally, the above speech recognition sample may be one or more speech recognition samples, and the above real speech-to-speech translation sample may be one or more real speech-to-speech translation samples.

Optionally, the electronic device may translate the second source-language text, to obtain second target-language speech features, and combine the second target-language speech features to obtain a second target-language speech feature. The pseudo-labeled speech-to-speech translation sample may be a quadruple, and includes: the second source-language speech feature, the second source-language text, the second target-language text, and the second target-language speech feature. In other words, the first two items in the pseudo-labeled speech-to-speech translation sample, i.e. the second source-language speech feature and the second source-language text, are both real.

Optionally, the electronic device may input the second source-language text into a machine translation (MT) model, to obtain second target-language text; and the electronic device may input the second target-language text into a text-to-speech (TTS) model, to obtain a second target-language speech feature.

It should be understood that it can be learned from the construction process of the above pseudo-labeled speech-to-speech translation sample that the difference between the real speech-to-speech translation sample and the pseudo-labeled speech-to-speech translation sample mainly lies in target-language text. For example, the real speech-to-speech translation sample is a quadruple, and includes: {s_{src,} t_{src,} t_{tgt}, s_{tgt}}, where sₛᵣₑ represents a real source-language speech feature, t_{src} represents real source-language text, t_{tgt} represents real target-language text, and s_{tgt} represents a target-language speech feature that is obtained by performing synthesis on t_{tgt}. The pseudo-labeled speech-to-speech translation sample is a quadruple, and includes: {s_{src}, t_{src}, t_{tgt}, s_{tgt}}, where s_{src} represents a real source-language speech feature, t_{src} represents real source-language text, t_{tgt} represents target-language text that is obtained by inputting the real source-language text into an MT model, and s_{tgt} represents a target-language speech feature that is obtained by performing synthesis on t^{'}_{tgt}.

In the present application, speech-to-speech translation based on the pseudo-labeled speech-to-speech translation sample may be referred to as pseudo translation label adaptation (PTLA).

It should be understood that the above pseudo-labeled speech-to-speech translation sample is obtained on the basis of the speech recognition sample, and in practice, the pseudo-labeled speech-to-speech translation sample may also be constructed on the basis of the source-language speech feature. For example, the electronic device may obtain a real source-language speech feature, input the source-language speech feature into an automatic speech recognition (ASR) model so as to obtain source-language text corresponding to the source-language speech feature, then input the source-language text into an MT model so as to obtain target-language text, and finally input the target-language text into a TTS model so as to obtain a target-language speech feature. On this basis, the source-language speech feature, source-language text, target-language text, and target-language speech feature constitute a pseudo-labeled speech-to-speech translation sample.

Optionally, in the present application, the source-language speech feature may be a log-Mel spectrogram of source-language speech, and the log-Mel spectrogram may be an 80-channel log-Mel spectrogram, but is not limited thereto.

Optionally, in the present application, the source-language speech feature may be a linear freq spectrogram of target-language speech, but is not limited thereto.

It should be understood that the process of training a speech-to-speech translation model by the electronic device includes: a pre-training stage and a fine-tuning stage.

Pre-training refers to model pre-training or the process of pre-training a model. Fine-tuning refers to the process of applying a pre-trained model to a data set of a certain task and enabling a parameter to adapt to a data set of the task.

For example, when there is a need to establish a network model so as to complete a specific image classification task, the electronic device needs to randomly initialize a parameter first, and then starts to train a network model and continuously adjusts a parameter of the model, such that the loss of the network model becomes smaller and smaller, until a training stop condition is met. This process is a pre-training process. When an image classification task similar to the above specific image classification task is obtained, the electronic device may directly use the previously trained network model, uses the parameter of the network model as an initialized parameter of the task, and then trains the network model and continuously adjusts the parameter of the model, such that the loss of the network model becomes smaller and smaller, until a training stop condition is met. This process is a fine-tuning process.

It should be understood that the above real speech-to-speech translation sample may also be referred to as an original speech-to-speech translation sample, and the pseudo-labeled speech-to-speech translation sample may also be referred to as a derived speech-to-speech translation sample. The real speech-to-speech translation sample may be applied to the pre-training stage of a speech-to-speech translation model, and may also be applied to the fine-tuning stage of the model. The pseudo-labeled speech-to-speech translation sample may be applied to the pre-training stage of the speech-to-speech translation model, and may also be applied to the fine-tuning stage of the model. This is not limited in the present application.

In conclusion, it is difficult to acquire paired speech-to-speech translation samples in actual scenarios, but it is relatively easy to acquire a speech recognition sample. A pseudo-labeled speech-to-speech translation sample can be generated based on the speech recognition sample, such that speech-to-speech translation samples are expanded, and thus the model training precision can be improved.

Several model training methods will be described as examples below.

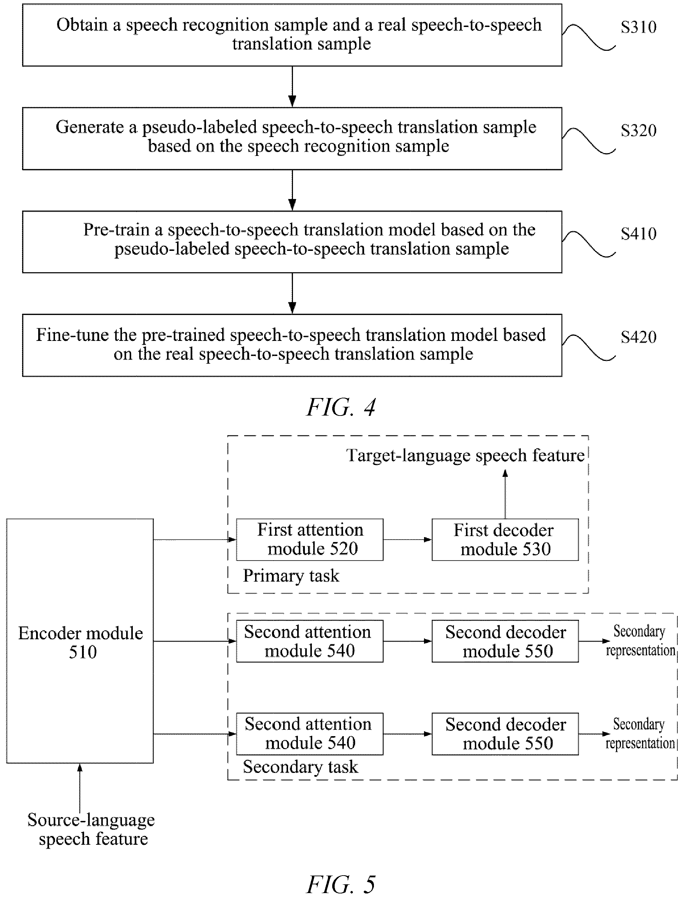

As shown in FIG. 4, S330 includes the following steps:
S410: Pre-train the speech-to-speech translation model based on the pseudo-labeled speech-to-speech translation sample.
S420: Fine-tune the pre-trained speech-to-speech translation model based on the real speech-to-speech translation sample.

It should be understood that since the pseudo-labeled speech-to-speech translation sample is introduced into the present application, in order to improve the model training precision, the pseudo-labeled speech-to-speech translation sample may be applied to a pre-training stage of the model, and the real speech-to-speech translation sample may be applied to a fine-training stage of the model.

Optionally, the electronic device may directly fine-tune the pre-trained speech-to-speech translation model by using the real speech-to-speech translation sample, that is, the electronic device fine-tunes the pre-trained speech-to-speech translation model by using only the real speech-to-speech translation sample.

Optionally, the electronic device may alternatively fine-tune the pre-trained speech-to-speech translation model based on the real speech-to-speech translation sample and the pseudo-labeled speech-to-speech translation sample. The model training method based on this manner may be referred to as a hybrid training method.

It should be understood that this hybrid training algorithm may retain the benefit of the pseudo-labeled speech-to-speech translation sample to the maximum extent. On the basis that the scale of a speech recognition sample is much larger than that of a real speech-to-speech translation sample, the scale of a pseudo-labeled speech-to-speech translation sample is much larger than that of the real speech-to-speech translation sample. In order to prevent the pseudo-labeled speech-to-speech translation sample from misleading a model optimization result, in the present application, up-sampling may be performed on the real speech-to-speech translation sample so as to expand the scale of the real speech-to-speech translation sample, and the pre-trained speech-to-speech translation model may be further fine-tuned by using the up-sampled speech-to-speech translation sample and the pseudo-labeled speech-to-speech translation sample.

Optionally, before fine-tuning the pre-trained speech-to-speech translation model based on the real speech-to-speech translation sample and the pseudo-labeled speech-to-speech translation sample, the electronic device may further label the real speech-to-speech translation sample with a first label, where the first label is used for identifying the real speech-to-speech translation sample as a real sample, and the first label may be represented as real; and the electronic device may label the pseudo-labeled speech-to-speech translation sample with a second label, where the second label is used for identifying the pseudo-labeled speech-to-speech translation sample as a pseudo-labeled sample, and the second label may be represented as pseudo. The model training method based on this manner may be referred to as a prompt training method, and on the basis of the prompt training method, the model can better distinguish the real speech-to-speech translation sample from the pseudo-labeled speech-to-speech translation sample.

In this embodiment of the present application, the electronic device may pre-train the speech-to-speech translation model based on the pseudo-labeled speech-to-speech translation sample, and fine-tune the pre-trained speech-to-speech translation model based on the real speech-to-speech translation sample. That is, pseudo-labeled data is mainly applied to a pre-training process, and in this way, the pseudo-labeled speech-to-speech translation sample may be prevented from misleading a model optimization result.

Further, due to the scarcity of real speech-to-speech translation samples, pseudo-labeled data may also participate in the fine-tuning process, but in order to prevent the pseudo-labeled speech-to-speech translation sample from misleading a model optimization result, up-sampling may be performed on the real speech-to-speech translation sample, and the pre-trained speech-to-speech translation model may be further fine-tuned by using the up-sampled speech-to-speech translation sample and the pseudo-labeled speech-to-speech translation sample. By means of the method, the problem of low model training precision caused by the scarcity of real speech-to-speech translation samples is solved; in addition, the pseudo-labeled speech-to-speech translation sample can be prevented from misleading a model optimization result.

Still further, before fine-tuning the pre-trained speech-to-speech translation model based on the real speech-to-speech translation sample and the pseudo-labeled speech-to-speech translation sample, the electronic device may further label the real speech-to-speech translation sample and the pseudo-labeled speech-to-speech translation sample with corresponding labels, such that the model can better distinguish the real speech-to-speech translation sample from the pseudo-labeled speech-to-speech translation sample.

Optionally, in the present application, the speech-to-speech translation model may be an existing Translatotron model, or the speech-to-speech translation model as shown in FIG. 5. This is not limited in the present application.

FIG. 5 is a schematic diagram of a speech-to-speech translation model according to an embodiment of the present application. As shown in FIG. 5, the model includes: an encoder module 510, a first attention module 520, a first decoder module 530, N second attention modules 540, and N second decoder modules 550, where N is a positive integer, and the N second attention modules are in a one-to-one correspondence with the N second decoder modules. In FIG. 5, N = 2 is taken as an example, and certainly, N may be alternatively equal to 1, 3, etc.

Optionally, the model may be a speech-to-speech translation model based on multi-task learning, and a plurality of tasks include: one primary task and N secondary tasks, where the primary task is a speech-to-speech translation task. The number of second attention modules and the number of second decoder modules are consistent with the number of secondary tasks, for example, N = 2, that is, there are two secondary tasks, and the two secondary tasks may be respectively a speech recognition task and a speech-to-text translation task, but are not limited thereto. The speech recognition task is used to transform a source-language speech feature into source-language text, and the speech-to-text translation task is used to transform a source-language speech feature into source-language text and transform the source-language text into target-language text. For another example, N = 1, that is, there is one secondary task, and the secondary task may be a speech recognition task or a speech-to-text translation task, but is not limited thereto. The first attention module 520 and the first decoder module 530 correspond to the primary task, and each group of second attention module 540 and second decoder module 550 in the lower part of the figure corresponds to one secondary task. The first decoder module 530 is mainly configured to predict and synthesize a target-language speech feature. During training, the two secondary tasks accept an input of the encoder module 510, and predicted loss values are added to the primary task in the form of a weighted sum. During testing, the second decoder modules 550 are not used.

The encoder module 510 is configured to obtain a source-language speech feature, and process the source-language speech feature to obtain a plurality of groups of first hidden-state representations corresponding to the source-language speech feature.

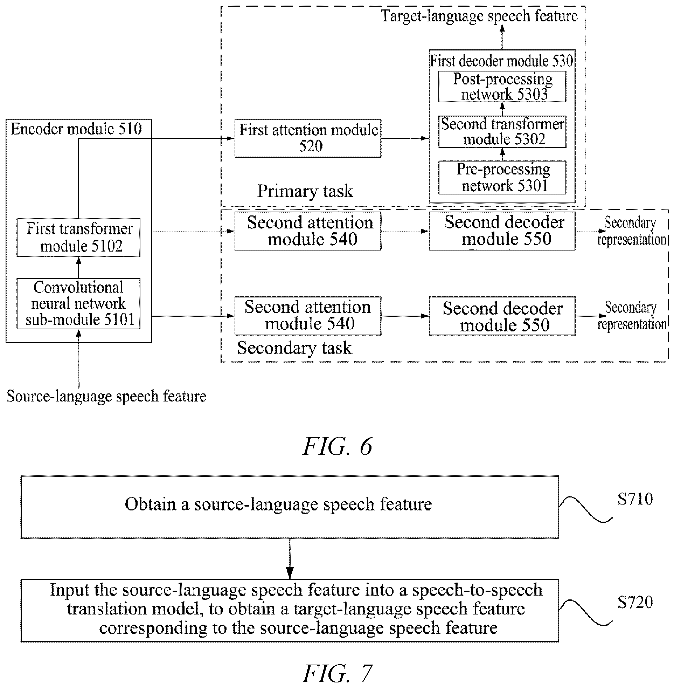

Optionally, FIG. 6 is a schematic diagram of another speech-to-speech translation model according to an embodiment of the present application. As shown in FIG. 6, the encoder module 510 includes: a convolutional neural network sub-module 5101 and a first transformer module 5102, where the convolutional neural network sub-module 5101 is configured to obtain the source-language speech feature, and process the source-language speech feature to obtain a second hidden-state representation corresponding to the source-language speech feature; and the first transformer module 5102 is configured to obtain the second hidden-state representation, and process the second hidden-state representation to obtain the plurality of groups of first hidden-state representations.

Optionally, the convolutional neural network sub-module 5101 may include two convolutional neural network layers, but is not limited thereto. For example, after an 80-channel log-Mel spectrogram is input into the convolutional neural network sub-module 5101, the two convolutional neural network layers may map the length of the 80-channel log-Mel spectrogram into a quarter of an original length, that is, it is assumed that the 80-channel log-Mel spectrogram is represented by 100 vectors and each vector is an 80-dimensional vector, and 25 vectors are then obtained after the 100 vectors are processed by the two convolutional neural network layers. In order to keep consistent with the number of hidden units in the first transformer module 5102, if there are 512 hidden units, each of the 25 vectors that are obtained after the 100 vectors are processed by the two convolutional neural network layers also has 512 dimensions, where the 25 512-dimensional vectors can be understood as the above second hidden-state representation here.

Optionally, the structure of the first transformer module 5102 may be similar to that of the encoder shown in FIG. 1, that is, the first transformer module 5102 may include six transformer layers or 12 transformer layers, which is not limited in the present application. Each transformer layer may carry 512 hidden units, that is, the hidden representation that is output by the transformer layer may be a 512-dimensional hidden representation. Each transformer layer may include two sub-units. The first one is a self-attention network using a multi-head self-attention mechanism, and the self-attention network using a multi-head self-attention mechanism may be a self-attention network using an eight-head self-attention mechanism. This is not limited in the present application. The second one is a fully connected feedforward network, where the feedforward network may use a 2048-dimensional internal state. The two sub-units both use residual connection and layer normalization. The N groups of first hidden-state representations may be obtained after the second hidden-state representation is processed by the first transformer module 5102, where N represents the number of transformer layers in the first transformer module 5102.

In view of the above examples, it is assumed that the convolutional neural network sub-module 5101 outputs 25 512-dimensional vectors, and N groups of first hidden-state representations may then be obtained after the 25 512-dimensional vectors are processed by the first transformer module 5102. Each group of first hidden-state representations includes 25 512-dimensional vectors, where 25 512-dimensional vectors that are obtained at the last layer of the first transformer module 5102 may be output to the first attention module 520, and 25 512-dimensional vectors that are obtained at an intermediate layer thereof may be output to a second attention module 540.

The first attention module 520 is configured to obtain one group of the plurality of groups of first hidden-state representations, and a first vector corresponding to each time step that is output by the first decoder, and process the group of first hidden-state representations and the first vector corresponding to each time step, to obtain a first attention representation corresponding to each time step.

The first decoder module 530 is configured to obtain a second vector corresponding to each time step, process the second vector corresponding to each time step to obtain the first vector corresponding to each time step, output the first vector corresponding to each time step to the first attention module 520, obtain the first attention representation corresponding to each time step, and process the first attention representation corresponding to each time step to obtain a target-language speech feature corresponding to the source-language speech feature.

Optionally, as shown in FIG. 6, the first decoder module 530 includes: a pre-processing network (prenet) 5301, a second transformer module 5302, and a post-processing network (postnet) 5303, where the pre-processing network 5301 is configured to obtain the second vector corresponding to each time step, process the second vector corresponding to each time step to obtain the first vector corresponding to each time step, and output the first vector corresponding to each time step to the first attention module; the second transformer module 5302 is configured to obtain the first attention representation corresponding to each time step, and process the first attention representation corresponding to each time step to obtain a target-language speech feature for each time step; and the post-processing network 5303 is configured to process the target-language speech feature for each time step to obtain the target-language speech feature corresponding to the source-language speech feature.

Optionally, a bottleneck number of dimensions of the pre-processing network 5301 may be 32.

In view of the above examples, in a training stage, the pre-processing network 5301 may obtain an 80-dimensional all-0 vector, which all-0 vector is a second vector corresponding to a first time step, and the pre-processing network 5301 may process the all-0 vector to obtain a 512-dimensional all-0 vector, which all-0 vector is a first vector corresponding to the first time step. Further, the pre-processing network 5301 may input the all-0 vector into the first attention module 520, and the first attention module 520 may process the all-0 vector and 25 512-dimensional vectors that are obtained from the encoder module 510, so as to obtain a first attention representation corresponding to the first time step. Furthermore, the first attention module 520 inputs the first attention representation corresponding to the first time step into the second transformer module 5302, and the second transformer module 5302 may process the first attention representation corresponding to the first time step to obtain a target-language speech feature for the first time step, where the target-language speech feature for the first time step is obtained through prediction. In addition, the pre-processing network 5301 may further obtain an actual target-language speech feature for the first time step, where the actual target-language speech feature for the first time step may be understood as a second vector corresponding to a second time step; and the pre-processing network 5301 may process the second vector corresponding to the second time step to obtain a 512-dimensional vector, where the 512-dimensional vector is a first vector corresponding to the second time step. Further, the pre-processing network 5301 may input the first vector corresponding to the second time step into the first attention module 520, and the first attention module 520 may process the first vector corresponding to the second time step and the 25 512-dimensional vectors that are obtained from the encoder module 510, so as to obtain a first attention representation corresponding to the second time step. Furthermore, the first attention module 520 inputs the first attention representation corresponding to the second time step into the second transformer module 5302, and the second transformer module 5302 may process the first attention representation corresponding to the second time step to obtain a target-language speech feature for the second time step, where the target-language speech feature for the second time step is obtained through prediction.

In summary, the pre-processing network 5301 may obtain an actual target-language speech feature for an i^{th} time step, where i = 1, 2, ..., M, and M is the total number of time steps. The actual target-language speech feature for the i^{th} time step may be understood as a second vector corresponding to an (i+1)^{th} time step, and the pre-processing network 5301 may process the second vector corresponding to the (i+1)^{th} time step to obtain a 512-dimensional vector, where the 512-dimensional vector is a first vector corresponding to the (i+1)^{th} time step. Further, the pre-processing network 5301 may input the first vector corresponding to the (i+1)^{th} time step into the first attention module 520, and the first attention module 520 may process the first vector corresponding to the (i+1)^{th} time step and the 25 512-dimensional vectors that are obtained from the encoder module 510, so as to obtain a first attention representation corresponding to the (i+1)^{th} time step. Furthermore, the first attention module 520 inputs the first attention representation corresponding to the (i+1)^{th} time step into the second transformer module 5302, and the second transformer module 5302 may process the first attention representation corresponding to the (i+1)^{th} time step to obtain a target-language speech feature for the (i+1)^{th} time step.

In a testing stage, the pre-processing network 5301 may obtain an 80-dimensional all-0 vector, which all-0 vector is a second vector corresponding to a first time step, and the pre-processing network 5301 may process the all-0 vector to obtain a 512-dimensional all-0 vector, which all-0 vector is a first vector corresponding to the first time step. Further, the pre-processing network 5301 may input the all-0 vector into the first attention module 520, and the first attention module 520 may process the all-0 vector and 25 512-dimensional vectors that are obtained from the encoder module 510, so as to obtain a first attention representation corresponding to the first time step. Furthermore, the first attention module 520 inputs the first attention representation corresponding to the first time step into the second transformer module 5302, and the second transformer module 5302 may process the first attention representation corresponding to the first time step to obtain a target-language speech feature for the first time step, where the target-language speech feature for the first time step is obtained through prediction. Further, the pre-processing network 5301 may obtain a predicted target-language speech feature for the first time step, and process the predicted target-language speech feature to obtain a 512-dimensional vector, where the predicted target-language speech feature for the first time step may be understood as the above second vector corresponding to the second time step, and the 512-dimensional vector is a first vector corresponding to the second time step. Further, the pre-processing network 5301 may input the first vector corresponding to the second time step into the first attention module 520, and the first attention module 520 may process the first vector corresponding to the second time step and the 25 512-dimensional vectors that are obtained from the encoder module 510, so as to obtain a first attention representation corresponding to the second time step. Furthermore, the first attention module 520 inputs the first attention representation corresponding to the second time step into the second transformer module 5302, and the second transformer module 5302 may process the first attention representation corresponding to the second time step to obtain a target-language speech feature for the second time step.

In summary, the pre-processing network 5301 may obtain a predicted target-language speech feature for an i^{th} time step, where i = 1, 2, ..., M, and M is the total number of time steps. The predicted target-language speech feature for the i^{th} time step may be understood as a second vector corresponding to an (i+1)^{th} time step, and the pre-processing network 5301 may process the second vector corresponding to the (i+1)^{th} time step to obtain a 512-dimensional vector, where the 512-dimensional vector is a first vector corresponding to the (i+1)^{th} time step. Further, the pre-processing network 5301 may input the first vector corresponding to the (i+1)^{th} time step into the first attention module 520, and the first attention module 520 may process the first vector corresponding to the (i+1)^{th} time step and the 25 512-dimensional vectors that are obtained from the encoder module 510, so as to obtain a first attention representation corresponding to the (i+1)^{th} time step. Furthermore, the first attention module 520 inputs the first attention representation corresponding to the (i+1)^{th} time step into the second transformer module 5302, and the second transformer module 5302 may process the first attention representation corresponding to the (i+1)^{th} time step to obtain a target-language speech feature for the (i+1)^{th} time step.

Optionally, the second transformer module 5302 may input target-language speech features for time steps into the post-processing network 5303, and the post-processing network 5303 may perform weighted summation on the target-language speech features for the time steps to obtain a target-language speech feature corresponding to the source-language speech feature.

Optionally, the structure of the second transformer module 5302 may be similar to that of the decoder shown in FIG. 1, that is, the second transformer module 5302 may include six transformer layers, which is not limited in the present application. The second transformer module 5302 may use the same hyper-parameter as the first transformer module 5102.

In the training stage of the speech-to-speech translation model, each of the second attention modules 540 is configured to obtain one group of the plurality of groups of first hidden-state representations, and a third vector corresponding to each time step that is output by a second decoder corresponding to the second attention module 540, and process the group of first hidden-state representations and the third vector corresponding to each time step, to obtain a second attention representation corresponding to each time step; and
the second decoder module 550 corresponding to the second attention module 540 is configured to obtain a fourth vector corresponding to each time step, process the fourth vector corresponding to each time step to obtain the third vector corresponding to each time step, output the third vector corresponding to each time step to the second attention module 540, obtain the second attention representation corresponding to each time step, and process the second attention representation corresponding to each time step to obtain a secondary representation corresponding to the source-language speech feature.

Optionally, the second decoder module 550 may include: a pre-processing network, a third transformer module, and a post-processing network, where the pre-processing network is configured to obtain a fourth vector corresponding to each time step, process the fourth vector corresponding to each time step to obtain the third vector corresponding to each time step, and output the third vector corresponding to each time step to the second attention module 540; the third transformer module is configured to obtain the second attention representation corresponding to each time step, and process the second attention representation corresponding to each time step to obtain a secondary representation for each time step; and the post-processing network is configured to process the secondary representation for each time step to obtain a secondary representation corresponding to the source-language speech feature.

Optionally, a bottleneck number of dimensions of the pre-processing network may be 32.

For example, in a training stage, the pre-processing network 5301 may obtain an 80-dimensional embedding vector, which embedding vector is a fourth vector corresponding to a first time step, and the pre-processing network may process the vector to obtain a 512-dimensional vector, which vector is a third vector corresponding to the first time step. Further, the pre-processing network may input the vector into the second attention module 540, and the second attention module 540 may process the vector and 25 512-dimensional vectors that are obtained from the encoder module 510, so as to obtain a second attention representation corresponding to the first time step. Furthermore, the second attention module 540 inputs the second attention representation corresponding to the first time step into the third transformer module, and the third transformer module may process the second attention representation corresponding to the first time step to obtain a secondary representation for the first time step, where the secondary representation for the first time step is obtained through prediction. In addition, the pre-processing network may further obtain an actual secondary representation for the first time step, where the actual secondary representation for the first time step may be understood as a fourth vector corresponding to a second time step; and the pre-processing network may process the fourth vector corresponding to the second time step to obtain a 512-dimensional vector, where the 512-dimensional vector is a third vector corresponding to the second time step. Further, the pre-processing network may input the third vector corresponding to the second time step into the second attention module 540, and the second attention module 540 may process the third vector corresponding to the second time step and the 25 512-dimensional vectors that are obtained from the encoder module 510, so as to obtain a second attention representation corresponding to the second time step. Furthermore, the second attention module 540 inputs the second attention representation corresponding to the second time step into the third transformer module, and the third transformer module may process the second attention representation corresponding to the second time step to obtain a secondary representation for the second time step, where the secondary representation for the second time step is obtained through prediction.

In summary, the pre-processing network may obtain an actual secondary representation for an i^{th} time step, where i = 1, 2, ..., M, and M is the total number of time steps. The actual secondary representation for the i^{th} time step may be understood as a fourth vector corresponding to an (i+1)^{th} time step, and the pre-processing network may process the fourth vector corresponding to the (i+1)^{th} time step to obtain a 512-dimensional vector, where the 512-dimensional vector is a third vector corresponding to the (i+1)^{th} time step. Further, the pre-processing network may input the third vector corresponding to the (i+1)^{th} time step into the second attention module 540, and the second attention module 540 may process the third vector corresponding to the (i+1)^{th} time step and the 25 512-dimensional vectors that are obtained from the encoder module 510, so as to obtain a second attention representation corresponding to the (i+1)^{th} time step. Furthermore, the second attention module 540 inputs the second attention representation corresponding to the (i+1)^{th} time step into the third transformer module, and the third transformer module may process the second attention representation corresponding to the (i+1)^{th} time step to obtain a secondary representation for the (i+1)^{th} time step.

Optionally, the third transformer module may input secondary representations for time steps into the post-processing network, and the post-processing network may perform weighted summation on the secondary representations for the time steps to obtain a secondary representation corresponding to the source-language speech feature.

Optionally, when the secondary task is a speech recognition task, the above secondary representation may be a speech recognition result, e.g. source-language text corresponding to source-language speech; and when the secondary task is a speech-to-text translation task, the above secondary representation may be a speech translation result, e.g. target-language text.

It should be understood that the speech-to-speech translation model provided in the present application is obtained by means of a corresponding improvement on the existing Translatotron model, and the improvement is specifically to replace a long short-term memory (LSTM) network with a transformer module. In the present application, the speech-to-speech translation model may be referred to as transformer-based Translatotron. In the LSTM network, the computing for each time step is local computing, whereas in the transformer module, the computing for each time step is global computing, such that the precision of the model can be improved.

It should be understood that the transformer-based Translatotron provided in the present application may not be trained on the basis of a pseudo-labeled speech-to-speech translation sample, and a speech-to-speech model using this training method may be referred to as a baseline system. Certainly, the transformer-based Translatotron provided in the present application may also be trained on the basis of the pseudo-labeled speech-to-speech translation sample, and a speech-to-speech model using this training method may be referred to as baseline system+PTLA.

The present application provides TEDEn2Zh data sets (English to Chinese) that is commonly used in speech translation, so as to test the performance of the baseline system and the performance of the baseline system+PTLA. The details are as shown in Table 1:

**Table 1**

| Methods | S-PER | Tp-BLEU | Dev-BLEU | test-BLEU |
|---|---|---|---|---|
| Baseline system | 13.06 | 44.57 | 7.0 | 11.2 |
| Baseline system+PTLA | 11.93 | 48.64 | 10.4 | 18.0 |

S-PER represents an error rate of phoneme recognition on a test set in a speech recognition task; Tp-BLEU represents bilingual evaluation understudy (BLEU) based on phoneme computing on a test set in a speech-to-text translation task; Dev-BLER represents BLEU based on phoneme computing on a development set in a primary task; and test-BLEU represents BLEU based on phoneme computing on a test set in a primary task.

It can be seen from Table 1 that the baseline system can achieve good performance in complex language direction translation, and the scheme of baseline system+PTLA can effectively improve the model performance.

A speech-to-speech translation method will be provided below.

FIG. 7 is a flowchart of a speech-to-speech translation method according to an embodiment of the present application. The method may be performed by any electronic device such as a mobile phone, a tablet computer, a notebook computer, a palmtop computer, an MID, or a desktop computer. For example, the method may be performed by the execution device in FIG. 2. This is not limited in the present application. As shown in FIG. 7, the method includes the following steps:
S710: Obtain a source-language speech feature.
S720: Input the source-language speech feature into a speech-to-speech translation model, to obtain a target-language speech feature corresponding to the source-language speech feature.

It should be understood that the speech-to-speech translation model may be obtained through training by using the above model training method, and on the basis that the precision of the speech-to-speech translation model that is obtained by means of the above training method is higher, speech-to-speech translation can be implemented better.

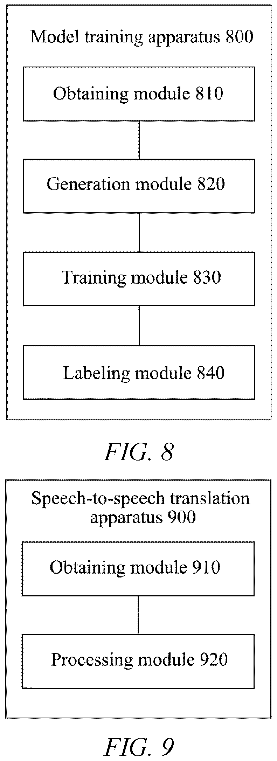

FIG. 8 is a schematic diagram of a model training apparatus 800 according to an embodiment of the present application. As shown in FIG. 8, the apparatus 800 includes: an obtaining module 810, a generation module 820, and a training module 830, where the obtaining module 810 is configured to obtain a speech recognition sample and a real speech-to-speech translation sample; the generation module 820 is configured to generate a pseudo-labeled speech-to-speech translation sample based on the speech recognition sample; and the training module 830 is configured to train a speech-to-speech translation model based on the pseudo-labeled speech-to-speech translation sample and the real speech-to-speech translation sample.

Optionally, the training module 830 is specifically configured to pre-train the speech-to-speech translation model based on the pseudo-labeled speech-to-speech translation sample, and fine-tune the pre-trained speech-to-speech translation model based on the real speech-to-speech translation sample.

Optionally, the training module 830 is specifically configured to fine-tune the pre-trained speech-to-speech translation model by using the real speech-to-speech translation sample; or fine-tune the pre-trained speech-to-speech translation model based on the real speech-to-speech translation sample and the pseudo-labeled speech-to-speech translation sample.

Optionally, the apparatus 800 further includes a labeling module 840 configured to: before the pre-trained speech-to-speech translation model is fine-tuned based on the real speech-to-speech translation sample and the pseudo-labeled speech-to-speech translation sample, label the real speech-to-speech translation sample with a first label, where the first label is used for identifying the real speech-to-speech translation sample as a real sample; and label the pseudo-labeled speech-to-speech translation sample with a second label, where the second label is used for identifying the pseudo-labeled speech-to-speech translation sample as a pseudo-labeled sample.

Optionally, the training module 830 is specifically configured to perform up-sampling on the real speech-to-speech translation sample to obtain an up-sampled speech-to-speech translation sample; and fine-tune the pre-trained speech-to-speech translation model by using the up-sampled speech-to-speech translation sample and the pseudo-labeled speech-to-speech translation sample.

Optionally, the real speech-to-speech translation sample includes: a first source-language speech feature, first source-language text, a first target-language speech feature, and first target-language text; and the speech recognition sample includes: a second source-language speech feature and second source-language text.

Optionally, the generation module 820 is specifically configured to translate the second source-language text to obtain second target-language text; and perform synthesis on the second target-language text to obtain a second target-language speech feature. The pseudo-labeled speech-to-speech translation sample includes: the second source-language speech feature, the second source-language text, the second target-language text, and the second target-language speech feature.

Optionally, the speech-to-speech translation model includes: an encoder module, a first attention module, a first decoder module, N second attention modules, and N second decoder modules, where N is a positive integer, and the N second attention modules are in a one-to-one correspondence with the N second decoder modules;
the encoder module is configured to obtain a source-language speech feature, and process the source-language speech feature to obtain a plurality of groups of first hidden-state representations corresponding to the source-language speech feature;
the first attention module is configured to obtain one group of the plurality of groups of first hidden-state representations, and a first vector corresponding to each time step that is output by the first decoder, and process the group of first hidden-state representations and the first vector corresponding to each time step, to obtain a first attention representation corresponding to each time step;
the first decoder module is configured to obtain a second vector corresponding to each time step, process the second vector corresponding to each time step to obtain the first vector corresponding to each time step, output the first vector corresponding to each time step to the first attention module, obtain the first attention representation corresponding to each time step, and process the first attention representation corresponding to each time step to obtain a target-language speech feature corresponding to the source-language speech feature;
in a training stage of the speech-to-speech translation model, each of the second attention modules is configured to obtain one group of the plurality of groups of first hidden-state representations, and a third vector corresponding to each time step that is output by a second decoder corresponding to the second attention module, and process the group of first hidden-state representations and the third vector corresponding to each time step, to obtain a second attention representation corresponding to each time step; and
the second decoder module corresponding to the second attention module is configured to obtain a fourth vector corresponding to each time step, process the fourth vector corresponding to each time step to obtain the third vector corresponding to each time step, output the third vector corresponding to each time step to the second attention module, obtain the second attention representation corresponding to each time step, and process the second attention representation corresponding to each time step to obtain a secondary representation corresponding to the source-language speech feature.

Optionally, the encoder module includes: a convolutional neural network sub-module and a first transformer module, where the convolutional neural network sub-module is configured to obtain the source-language speech feature, and process the source-language speech feature to obtain a second hidden-state representation corresponding to the source-language speech feature; and the first transformer module is configured to obtain the second hidden-state representation, and process the second hidden-state representation to obtain the plurality of groups of first hidden-state representations.

Optionally, the first decoder module includes: a pre-processing network, a second transformer module, and a post-processing network, where the pre-processing network is configured to obtain the second vector corresponding to each time step, process the second vector corresponding to each time step to obtain the first vector corresponding to each time step, and output the first vector corresponding to each time step to the first attention module; the second transformer module is configured to obtain the first attention representation corresponding to each time step, and process the first attention representation corresponding to each time step to obtain a target-language speech feature for each time step; and the post-processing network is configured to process the target-language speech feature for each time step to obtain the target-language speech feature corresponding to the source-language speech feature.

It should be understood that the apparatus embodiment may correspond to the method embodiment. For similar descriptions, reference may be made to the method embodiment. To avoid repetitions, details are not described herein again. Specifically, the apparatus 800 shown in FIG. 8 may perform the above model training method embodiment, and the foregoing and other operations and/or functions of the modules in the apparatus 800 are respectively intended to implement corresponding procedures of the above model training method, which are not described herein again for the sake of brevity.

The apparatus 800 in this embodiment of the present application is described above with reference to the accompanying drawings from the perspective of a functional module. It should be understood that the functional module may be implemented in the form of hardware, or may be implemented by instructions in the form of software, or may be implemented by a combination of hardware and a software module. Specifically, the steps in the method embodiment in the embodiments of the present application may be completed by a hardware integrated logic circuit in a processor and/or the instructions in the form of the software. The steps of the method disclosed with reference to the embodiments of the present application may be directly embodied to be completed by a hardware decoding processor or by a combination of hardware in the decoding processor and a software module. Optionally, the software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps in the above model training method embodiment in combination with the hardware of the processor.

FIG. 9 is a schematic diagram of a speech-to-speech translation apparatus 900 according to an embodiment of the present application. As shown in FIG. 9, the apparatus 900 includes: an obtaining module 910 and a processing module 920, where the obtaining module 910 is configured to obtain a source-language speech feature; and the processing module 920 is configured to input the source-language speech feature into a speech-to-speech translation model that is obtained through training by using the above model training method, to obtain a target-language speech feature corresponding to the source-language speech feature.

It should be understood that the apparatus embodiment may correspond to the method embodiment. For similar descriptions, reference may be made to the method embodiment. To avoid repetitions, details are not described herein again. Specifically, the apparatus 900 shown in FIG. 9 may perform the above speech-to-speech translation method embodiment, and the foregoing and other operations and/or functions of the modules in the apparatus 900 are respectively intended to implement corresponding procedures of the above speech-to-speech translation method, which are not described herein again for the sake of brevity.

The apparatus 900 in this embodiment of the present application is described above with reference to the accompanying drawings from the perspective of a functional module. It should be understood that the functional module may be implemented in the form of hardware, or may be implemented by instructions in the form of software, or may be implemented by a combination of hardware and a software module. Specifically, the steps in the method embodiment in the embodiments of the present application may be completed by a hardware integrated logic circuit in a processor and/or the instructions in the form of the software. The steps of the method disclosed with reference to the embodiments of the present application may be directly embodied to be completed by a hardware decoding processor or by a combination of hardware in the decoding processor and a software module. Optionally, the software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps in the above speech-to-speech translation method embodiment in combination with the hardware of the processor.

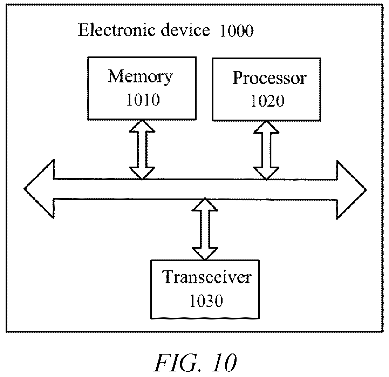

FIG. 10 is a schematic block diagram of an electronic device 1000 according to an embodiment of the present application.

As shown in FIG. 10, the electronic device 1000 may include:
a memory 1010 and a processor 1020, where the memory 1010 is configured to store a computer program, and transmit the program code to the processor 1020. In other words, the processor 1020 may invoke, from the memory 1010, and run the computer program to implement the method in the embodiments of the present application.

For example, the processor 1020 may be configured to perform the foregoing method embodiment according to instructions in the computer program.

In some embodiments of the present application, the processor 1020 may include but is not limited to:
a general-purpose processor, a digital signal processor (DSP), an application specific integrated circuit (ASIC), a field programmable gate array (FPGA) or another programmable logic device, a discrete gate or transistor logic device, a discrete hardware component, and the like.

In some embodiments of the present application, the memory 1010 includes but is not limited to:
a volatile memory or a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. By way of example but not restrictive description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synch link dynamic random access memory (SLDRAM), and a direct rambus random access memory (DR RAM).

In some embodiments of the present application, the computer program may be divided into one or more program modules, and the one or more program modules are stored in the memory 1010 and executed by the processor 1020, to implement the method provided in the present application. The one or more modules may be a series of computer program instruction segments capable of implementing specific functions. The instruction segments are used to describe an execution process of the computer program in the electronic device.

As shown in FIG. 10, the electronic device may further include:
a transceiver 1030. The transceiver 1030 may be connected to the processor 1020 or the memory 1010.

The processor 1020 may control the transceiver 1030 to communicate with another device, specifically to send information or data to the another device or to receive information or data sent by the another device. The transceiver 1030 may include a transmitter and a receiver. The transceiver 1030 may further include an antenna. There may be one or more antennas.

It should be understood that the components of the electronic device are connected to each other through a bus system. In addition to a data bus, the bus system further includes a power bus, a control bus, and a status signal bus.

The present application further provides a computer storage medium storing a computer program that, when executed by a computer, causes the computer to perform the method in the foregoing method embodiment. Alternatively, an embodiment of the present application further provides a computer program product including instructions that, when executed by a computer, cause the computer to perform the method in the foregoing method embodiment.

When implemented in software, all or some of the embodiments may be implemented in the form of the computer program product. The computer program product includes one or more computer instructions. When the computer program instructions are loaded and executed on a computer, all or some of the processes or functions according to the embodiments of the present application are generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or may be a data storage device, such as an integrated server or a data center, that includes one or more usable media. The usable medium may be a magnetic medium (for example, a floppy disk, a hard disk, or a magnetic tape), an optical medium (for example, a digital video disc (DVD)), a semiconductor medium (for example, a solid state disk (SSD)), etc.

A person of ordinary skill in the art may be aware that the modules and algorithm steps of various examples described in conjunction with the embodiments disclosed herein can be implemented in electronic hardware or a combination of computer software and electronic hardware. Whether these functions are performed in hardware or software depends on the specific application and design constraints of the technical solution. A person skilled in the art can implement the described functions by using different methods for each particular application, but such implementation should not be considered as going beyond the scope of the present application.

In the several embodiments provided in the present application, it should be understood that the disclosed system, apparatus, and method may be implemented in other manners. For example, the described apparatus embodiment is merely an example. For example, the module division is merely logical function division and may be other division during actual implementation. For example, a plurality of modules or components may be combined or integrated into another system, or some features may be ignored or not performed. In addition, the displayed or discussed mutual couplings, direct couplings, or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, and may be located at one position, or may be distributed on a plurality of network units. Some or all of the modules may be selected according to actual needs to achieve the objectives of the solutions of the embodiments. For example, functional modules in the embodiments of the present application may be integrated into one processing module, each of the modules may exist alone physically, or two or more modules may be integrated into one module.

The foregoing descriptions are merely specific implementations of the present application, but are not intended to limit the scope of protection of the present application. Any variation or replacement readily figured out by a person skilled in the art within the technical scope disclosed in the present application shall fall within the scope of protection of the present application. Therefore, the scope of protection of the present application shall be subject to the scope of protection of the claims.

## Claims

1. A model training method, **characterized by** comprising:
obtaining a speech recognition sample and a real speech-to-speech translation sample;
generating a pseudo-labeled speech-to-speech translation sample based on the speech recognition sample; and
training a speech-to-speech translation model based on the pseudo-labeled speech-to-speech translation sample and the real speech-to-speech translation sample.

2. The method according to claim 1, **characterized in that** the training a speech-to-speech translation model based on the pseudo-labeled speech-to-speech translation sample and the real speech-to-speech translation sample comprises:
pre-training the speech-to-speech translation model based on the pseudo-labeled speech-to-speech translation sample, and fine-tuning the pre-trained speech-to-speech translation model based on the real speech-to-speech translation sample.

3. The method according to claim 2, **characterized in that** the fine-tuning the pre-trained speech-to-speech translation model based on the real speech-to-speech translation sample comprises:
fine-tuning the pre-trained speech-to-speech translation model by using the real speech-to-speech translation sample; or
fine-tuning the pre-trained speech-to-speech translation model based on the real speech-to-speech translation sample and the pseudo-labeled speech-to-speech translation sample.

4. The method according to claim 3, **characterized in that** before the fine-tuning the pre-trained speech-to-speech translation model based on the real speech-to-speech translation sample and the pseudo-labeled speech-to-speech translation sample, the method further comprises:
labeling the real speech-to-speech translation sample with a first label, wherein the first label is used for identifying the real speech-to-speech translation sample as a real sample; and
labeling the pseudo-labeled speech-to-speech translation sample with a second label, wherein the second label is used for identifying the pseudo-labeled speech-to-speech translation sample as a pseudo-labeled sample.

5. The method according to claim 3 or 4, **characterized in that** the fine-tuning the pre-trained speech-to-speech translation model based on the real speech-to-speech translation sample and the pseudo-labeled speech-to-speech translation sample comprises:
performing up-sampling on the real speech-to-speech translation sample to obtain an up-sampled speech-to-speech translation sample; and
fine-tuning the pre-trained speech-to-speech translation model by using the up-sampled speech-to-speech translation sample and the pseudo-labeled speech-to-speech translation sample.

6. The method according to any one of claims 1 to 4, **characterized in that** the real speech-to-speech translation sample comprises: a first source-language speech feature, first source-language text, a first target-language speech feature, and first target-language text; and the speech recognition sample comprises: a second source-language speech feature and second source-language text.

7. The method according to claim 6, **characterized in that** the generating a pseudo-labeled speech-to-speech translation sample based on the speech recognition sample comprises:
translating the second source-language text to obtain second target-language text; and
performing synthesis on the second target-language text to obtain a second target-language speech feature,
wherein the pseudo-labeled speech-to-speech translation sample comprises: the second source-language speech feature, the second source-language text, the second target-language text, and the second target-language speech feature.

8. The method according to any one of claims 1 to 4, **characterized in that** the speech-to-speech translation model comprises: an encoder module, a first attention module, a first decoder module, N second attention modules, and N second decoder modules, wherein N is a positive integer, and the N second attention modules are in a one-to-one correspondence with the N second decoder modules;
the encoder module is configured to obtain a source-language speech feature, and process the source-language speech feature to obtain a plurality of groups of first hidden-state representations corresponding to the source-language speech feature;
the first attention module is configured to obtain one group of the plurality of groups of first hidden-state representations, and a first vector corresponding to each time step that is output by the first decoder, and process the group of first hidden-state representations and the first vector corresponding to each time step, to obtain a first attention representation corresponding to each time step;
the first decoder module is configured to obtain a second vector corresponding to each time step, process the second vector corresponding to each time step to obtain the first vector corresponding to each time step, output the first vector corresponding to each time step to the first attention module, obtain the first attention representation corresponding to each time step, and process the first attention representation corresponding to each time step to obtain a target-language speech feature corresponding to the source-language speech feature;
in a training stage of the speech-to-speech translation model, each of the second attention modules is configured to obtain one group of the plurality of groups of first hidden-state representations, and a third vector corresponding to each time step that is output by a second decoder corresponding to the second attention module, and process the group of first hidden-state representations and the third vector corresponding to each time step, to obtain a second attention representation corresponding to each time step; and
the second decoder module corresponding to the second attention module is configured to obtain a fourth vector corresponding to each time step, process the fourth vector corresponding to each time step to obtain the third vector corresponding to each time step, output the third vector corresponding to each time step to the second attention module, obtain the second attention representation corresponding to each time step, and process the second attention representation corresponding to each time step, to obtain a secondary representation corresponding to the source-language speech feature.

9. The method according to claim 8, **characterized in that** the encoder module comprises: a convolutional neural network sub-module and a first transformer module, wherein
the convolutional neural network sub-module is configured to obtain the source-language speech feature, and process the source-language speech feature to obtain a second hidden-state representation corresponding to the source-language speech feature; and
the first transformer module is configured to obtain the second hidden-state representation, and process the second hidden-state representation to obtain the plurality of groups of first hidden-state representations.

10. The method according to claim 9, **characterized in that** the first decoder module comprises: a pre-processing network, a second transformer module, and a post-processing network, wherein
the pre-processing network is configured to obtain the second vector corresponding to each time step, process the second vector corresponding to each time step to obtain the first vector corresponding to each time step, and output the first vector corresponding to each time step to the first attention module;
the second transformer module is configured to obtain the first attention representation corresponding to each time step, and process the first attention representation corresponding to each time step to obtain a target-language speech feature for each time step; and
the post-processing network is configured to process the target-language speech feature for each time step to obtain the target-language speech feature corresponding to the source-language speech feature.

11. A speech-to-speech translation method, **characterized by** comprising:
obtaining a source-language speech feature; and
inputting the source-language speech feature into a speech-to-speech translation model that is obtained through training by using the method according to any one of claims 1 to 10, to obtain a target-language speech feature corresponding to the source-language speech feature.

12. A model training apparatus, **characterized by** comprising:
an obtaining module configured to obtain a speech recognition sample and a real speech-to-speech translation sample;
a generation module configured to generate a pseudo-labeled speech-to-speech translation sample based on the speech recognition sample; and
a training module configured to train a speech-to-speech translation model based on the pseudo-labeled speech-to-speech translation sample and the real speech-to-speech translation sample.

13. A speech-to-speech translation apparatus, **characterized by** comprising:
an obtaining module configured to obtain a source-language speech feature; and
a processing module configured to input the source-language speech feature into a speech-to-speech translation model that is obtained through training by using the method according to any one of claims 1 to 10, to obtain a target-language speech feature corresponding to the source-language speech feature.

14. An electronic device, **characterized by** comprising:
a processor and a memory, wherein the memory is configured to store a computer program, and the processor is configured to invoke and run the computer program stored in the memory, to perform the method according to any one of claims 1 to 11.

15. A computer-readable storage medium, **characterized by** being configured to store a computer program, wherein the computer program causes a computer to perform the method according to any one of claims 1 to 11.
